# EUROPEAN PATENT SPECIFICATION

(11) **EP 2 867 596 B1**
(45) Date of publication and mention of the grant of the patent: **19.12.2018**
(21) Application number: 13737352.8
(22) Date of filing: 25.06.2013
(51) Int. Cl.: F25B 9/00, F25B 39/02, F25B 40/00, C09K 5/04

(54) **IMPROVEMENTS TO REFRIGERATION SYSTEMS**
VERBESSERUNGEN AN KÄLTEANLAGEN
PERFECTIONNEMENTS APPORTÉS À DES SYSTÈMES DE RÉFRIGÉRATION

(30) Priority: 25.06.2012 GB 201211208
(43) Date of publication of application: 06.05.2015
(73) Proprietor: Stenhouse, James Thornton, Rutland, Leicestershire LE15 7JB (GB)
(72) Inventor: Stenhouse, James Thornton, Rutland, Leicestershire LE15 7JB (GB)
(74) Representative: Stephenson, Philip
(86) International application number: PCT/GB2013/051667
(87) International publication number: WO 2014/001780

(56) References cited:
- EP-A1- 1 167 903
- WO-A1-02/01120
- JP-B2- 3 437 302
- US-A- 3 768 273
- US-A- 3 932 158
- US-A1- 2006 075 775
- US-B2- 7 234 310

## Description

The invention which is the subject of this application relates to improvements in refrigeration systems and particularly in relation to cascade refrigeration systems.

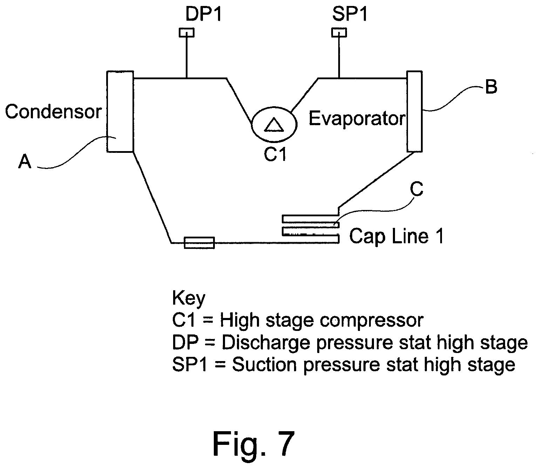

The provision of refrigeration systems is well known and there are numerous commercial and domestic uses to which the same can be put. Many commercial processes for example; storage of medical, biological or food materials, or processes involving the production or testing of electronic and microelectronic circuits, chemical synthesis, material processing, vacuum coating, require or are improved by temperatures lower than maybe achieved with conventional refrigeration, which has a practical lower limit of -60 oC. Alternatives using a physical cryogens e.g. dry ice are in many cases not practical; consequently specialised mechanical refrigeration systems are often the most practical solution. Figure 7 illustrates a standard refrigeration circuit in which there is provided a Condenser A and evaporator B connected to a compressor C and with discharge pressure and suction pressure points DP1 and SP1 respectively. To achieve low temperatures within these refrigeration systems it is either necessary to operate the evaporator of the system at lower pressures or to use gases which have low boiling points. In practice low boiling point refrigerants are used since evaporating refrigerants at pressures less than atmospheric pressure may cause electrical or contamination problems especially where the system is large. Low boiling point refrigerants, however have low critical temperatures and require high compressor discharge pressures to effect condensation from vapour into the liquid phase, adiabatic heating causes higher gas discharge temperatures at the compressor which is generally undesirable.

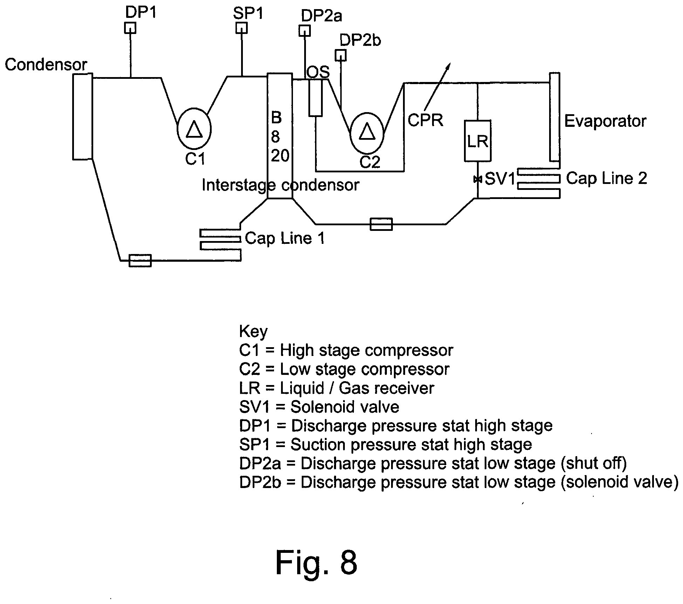

To achieve the desired temperature in a single compressive step is impossible within the constraints of commercial refrigeration plant and has been the major impediment in implementing carbon dioxide as a commercial refrigerant
One form of known refrigeration system is are cascade refrigeration systems. An example of the same is shown Figure 8 in which there is provided a high stage compressor C1 and a low stage compressor C2, a liquid/ gads receiver LR. A solenoid valve SV1 is provided and the discharge and suction pressure points are provided DP1 and SP1 for the high pressure stage and DP2a and DP2b discharge pressure for the shutoff and solenoid valve for the low pressure stage are provided. Cascade refrigeration systems employ two or more refrigeration cycles typically operating at different pressure levels and or temperature levels. The duty of the lower temperature cycle is to provide the desired refrigeration effect at a relatively low temperature and the condenser n the lower temperature cycle is thermally coupled to the evaporator in the higher temperature cycle such that the evaporator in the higher cycle only serves to extract the heat released by the condenser in the lower cycle and this heat is into the ambient air or water stream in the condenser of the higher cycle.

Auto-cascade refrigeration processes were first proposed by A.P Kleemenko in 1960 and as a result the apparatus can also be known as the Kleemenko cycle or one-flow or mixed gas cascade. Typically, it is employed commercially as a single-stream mixed-refrigerant technique to cool or liquefy gases during production of industrial gases, particularly in the petrochemical industry. When applied to a closed loop refrigeration system, an auto-cascade process may achieve temperatures of less than 100°K

The development and application of cryo-coolers - small cryogenic refrigerators based upon Peltier, Joule Thompsen or liquid cryogens which are designed to provide localized cooling at cryogenic temperatures - is an important specialised field within refrigeration. Smaller, efficient cryo-coolers are serving growing numbers of advanced sensor and viewing systems, whilst larger systems provide cooling for medical applications e.g. MRI and PET scanners. In the field of vacuum coating, water vapour cryopumps are an essential enabling technology in the production of many thin film devices and components, from capacitors and photo-voltaic solar cells to the modern smart phone. Other emerging applications of commercial interest include cooling of high temperature superconductors and the abatement and recycling of condensable gases from exhaust and waste streams using cryo-condensation.

The practical design and implementation of auto-cascade refrigeration apparatus has always presented engineers with significant challenges in the commercialisation of the apparatus and particularly in smaller refrigeration systems typically due to constraints of size and/or cost. This has inhibited its use in the growing number of applications for cryogenic refrigeration despite the efficiency of auto-cascade apparatus when on a larger scale and the inherent safety and simplicity of the apparatus being attractive drivers for the development of the technology.

The apparatus typically includes plate heat exchangers which are characterised by a relatively large surface area, close approach temperatures and higher thermal efficiencies than traditional types employed in the auto-cascade process. The auto-cascade process is a multi-component refrigeration process which achieves a very low temperature in a single compressive step. However plate heat exchangers are difficult to optimise in order to exploit their full potential, because the mixed flow of vapour and condensate means a requirement for a longer residency time of the fluid within the heat exchanger. This, in turn, leads the design of the plate heat exchangers towards longer path lengths, which become economically less attractive, especially at smaller scales. Furthermore, it can be found that plate heat exchanger-based auto cascade refrigeration processes, if they are subjected to overloading at the evaporator, can become decoupled in that each refrigeration cycle can be viewed as a separate element which is dependent upon the temperature pressure relationship existing within the whole and each other process. Typical over-load conditions are caused in batch processes where there is a large heat load - for example batch chemical processes, or when used as a vacuum pump. Furthermore, if the path length of the plate heat exchanger is shortened it means that the tolerance of over-load is reduced.

Document US2006075775 discloses an example of an auto cascade refrigeration system.

The aim of the present invention is to provide improvements to the handling and design of elements of the auto cascade refrigeration apparatus. A further aim is to provide improvement to auto cascade apparatus in conjunction with plate-type heat exchangers so that practical working apparatus are obtained to exploit both higher efficiency and greater process stability. A further aim is to provide improved refrigerants for use in these systems.

In a first aspect of the invention there is provided an auto-cascade refrigeration system according to claim 1, including a compressor to compress cooling fluid, a heat exchanger to condense at least some of the fluid and further heat exchangers in combination with phase separator and metering devices and an evaporator to evaporate the fluid into a return or suction stream and which re-enters the heat exchangers and wherein at least one flow metering device is provided with an outlet which leads into the suction side inlet of at least one of the heat exchangers to form an ejector, a sub-cooler is provided and a flow of condensed liquid refrigerant passes from a high pressure side of the sub cooler to a low pressure side of the sub-cooler, the passage of fluid from the high pressure side of the sub-cooler is via two outlets with a first outlet passing to the flow metering device and provided such that the liquid fed to the low pressure side is preferentially supplied to the first outlet rather than to the second outlet which is a feed to the evaporator, the sub-cooler acts as both a heat exchanger and a liquid reservoir for cryogenically cooled refrigerant characterised in that the sub-cooler is located below the heat exchanger to which the same is connected such that the sub-cooler collects any condensate formed in the refrigeration process.

In one embodiment the further heat exchangers are plate heat exchanger.

In one embodiment the flow of fluid returning to the compressor passes through the heat exchanger and is introduced into a volume in the heat exchanger via an inlet and leaves via an outlet. Typically the outlet from the said flow metering device is of a smaller diameter than the said inlet into the heat exchanger.

In one embodiment the outlet from the flow metering device is placed at an angle <42 ° to the principle gas flow through the heat exchanger inlet to create a Venturi effect.

In one embodiment the outlet from the flow metering device is parallel to the flow from the heat exchanger inlet to the heat exchanger outlet.

In one embodiment the flow metering device outlet is inclined by an angle <42° so that the fluid stream leaving the flow metering device outlet is imparted to the main flow.

Typically the system can be operated in Standby, Cooling and defrost modes.

Typically all gasses condensed in the said heat exchanger pass through a metering device connected to the sub cooler.

In one embodiment a capillary line is provided to carry the return from the suction side of the sub-cooler through a swan neck configuration.

In one embodiment the sub cooler acts as both a heat exchanger and a liquid reservoir for cryogenically cooled refrigerant.

In one embodiment the system includes a phase change separator which includes an inlet to receive a mixed flow of liquid and gas, a separation element, to allow separated out gas/vapour to exit through an outlet and the liquid to exit through an outlet and wherein the separator has a void space in which the received mixed flow of fluid is held and the diameter of the void is greater than 4 times the diameter of the inlet and the volume of the void is greater than 2% of the swept volume of the compressor.

In one embodiment the outlet is located in the base of the separator and the walls adjacent the outlet are convex in shape.

In one embodiment the system uses a refrigerant comprising a material selected from each of Groups A,B,C and D of Table 1.

In one embodiment the refrigerant used includes HFC32 and/or ethane.

In one embodiment the refrigerant used includes HFC -365mfc, HCF-227efa, HFC-32, HFC-23, Ethane, HFC 14 and Argon

In an alternative embodiment the refrigerant used includes HFC -365mfc, R-1234ez, R-1234yf, HFC-32, Ethane, HFC 14, Argon

In one embodiment the refrigeration system is a cascade or an auto cascade system.

In one embodiment there is provided a refrigerant for use in a refrigeration system wherein the refrigerant includes HFC32 and/or ethane.

In one embodiment the refrigerant comprises a material selected from each of Groups A,B,C and D of Table 1.

In one embodiment the refrigerant used includes HFC -365mfc, HCF-227efa, HFC-32, HFC-23, Ethane, HFC 14 and Argon

In one embodiment the refrigerant used includes HFC -365mfc, R-1234ez, R-1234yf, HFC-32, Ethane, HFC 14, Argon

Specific embodiments of the invention are now described with reference to the accompanying drawings; wherein
Figure 1 illustrates schematically an auto cascade refrigeration system;
Figure 2 illustrates a schematic cross section of a phase separator in accordance with one embodiment of the invention;
Figure 3 illustrates the positioning of an outflow from a flow metering device outlet into a return path of the refrigeration apparatus in accordance with one embodiment of the invention;
Figure 4 illustrates a sub-cooler liquid distribution arrangement in accordance with the invention;
Figure 5a shows the orientation of a flow metering device in a conventional refrigeration system and Figure 5b shows the orientation of a flow metering device in accordance with one embodiment of the present invention;
Figure 6 illustrates the placement of an auxiliary condenser below a primary condenser in accordance with one embodiment of the invention;
Figures 7 and 8 illustrate conventional refrigeration systems.

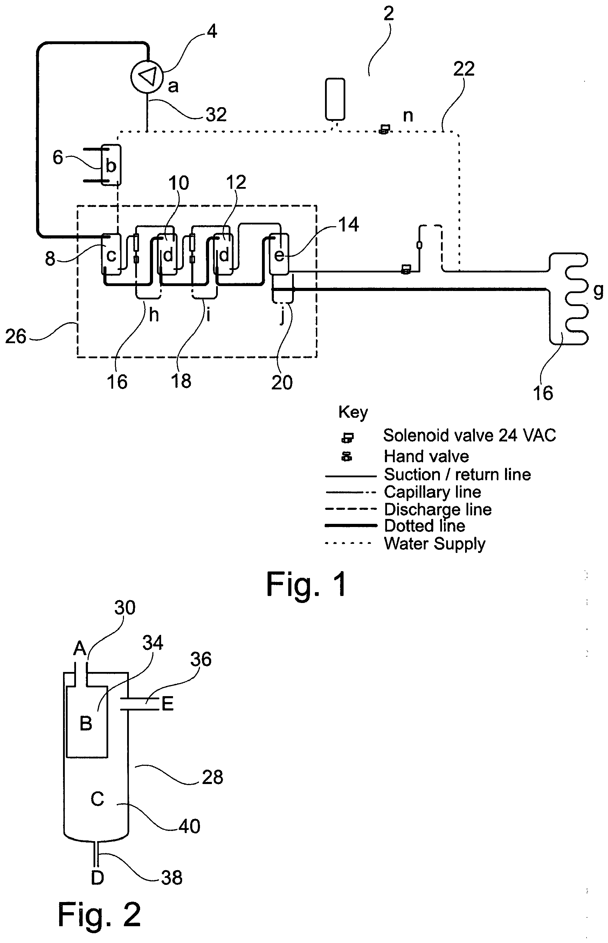

Figure 1 is a representation of an auto cascade refrigeration system 2. The cooling gas in the system is compressed by the compressor (4) and passes through a water or air cooled heat exchanger (6) where some of the higher boiling point components of the mixed gases are condensed. These are further cooled in further heat exchangers (8,10,12,14). The liquid phase is passed, via a combination of phase separator and metering devices (16,18,20) and evaporated into the returning (suction) gas stream, re-entering the heat exchangers (8,10,12,14). At each heat exchanger there is a temperature drop of at least 40°K to the final heat exchanger, also known as the sub-cooler (14). Where the temperature and pressure causes sub cooling of the liquefied lowest boiling point components, metering device (20) joins the high and low sides of the system to complete the circuit and to maintain material in the sub-cooler (14) at a temperature less than its bubble point. During the defrost process, hot high pressure gas is taken directly from the compressor (4) and injected directly into the evaporator via line (22), raising the evaporator's (24) temperature.

In the operation of the mixed gas refrigeration systems such as auto cascade systems to which the invention relates, the principle challenge is to maximise cooling capacity, whilst simultaneously maintaining a stable cascade system under three distinct operational conditions which are "Standby" in which the compressor 4 is running but no refrigerant is passing through the evaporator 24 and in which mode the aim is to achieve minimal energy consumption whilst increasing or maintaining the cooled state of the refrigerant; "Cooling" in which the refrigerant passes through a metering device to evaporate within the evaporator 24, thereby achieving a cooling effect; and "Defrost" in which hot refrigerant bypasses the refrigeration process within the rectangular box 26 described with dotted lines in Figure 1 , and is injected directly into the evaporator 24 to effect rapid warming to the required temperature.

There is a significant difference both in terms of mass and energy in each operational state. In order to achieve a working system, designers have to balance cooling effect against stability of the system. When in Standby mode, there must be sufficient flow between high and low pressure regimes within the process to maintain safe operating conditions. If the flow is insufficient, pressure and temperature drop. The low pressure side then drops further in temperature, which reduces mass flow, causing discharge pressure to drop in a feedback loop. The short path length of plate heat exchangers 8,10,12,14 means there is often carry-over of un-evaporated refrigerant in the suction side to an element closer to the compressor. This typically causes the initial lowering of temperatures and is prevalent during stand by and at the end of de-frost cycles. The system then feeds back on itself, causing the process to collapse. The prior art auto-cascade systems of the type shown in Figure 1 and especially where they are subjected to cyclical heat/cool processes, suffer from a slow cool down from ambient and poor return to "normal" standby conditions following defrost. As a consequence it has been found necessary to operate systems on a continual 24 hour basis which can mean that the apparatus is operated when the cooling effect is not necessarily required but is done in order to attempt to obtain operation stability.

Features and components of the system of Figure 1 are now described in accordance with the invention with reference to the following drawings which allow the features of the system of Figure 1 to be adapted such that the features, alone and/or in combination, improve the efficiency of cooling, and/or assist in energy conservation by reducing or eliminating a recovery period (standby) between the end of the defrost and the cooling stages of the process cycle. Although the improvements are particularly applicable to the system shown in Figure 1 and the plate heat exchangers used therein they may also be applied with similar beneficial effect in other types of heat exchangers.

In Figure 2, there is shown a phase change separator 28 in accordance with the invention. In this case a mixed flow of liquid and gas enters either through the input 30 which is of a similar diameter to the compressor discharge 32 of the compressor 4 of the system of Figure 1. The flow then passes through a separation element (34), such that the separated out gas/vapour exits through outlet 36 and the liquid exits through outlet 38. The separator is located downstream of the respective heat exchangers in the refrigeration system and the separator is designed such that the diameter of the void 40 is significantly greater than 4 times the diameter of the inlet 30 and the volume of the void 40 is greater than 2% of the swept volume of the compressor 4. The provision of the phase change separator with the features described prevents re-entrainment of condensate in the gas flow, and ensures that the maximum amount of condensate passes to the liquid outflow 28, where the collection is such that no liquid is held in the void 40 as the base walls 42 are convex in shape to ensure that all liquid is delivered from the separator to the inlet of the respective metering device 16,18,20 to which the separator leads.

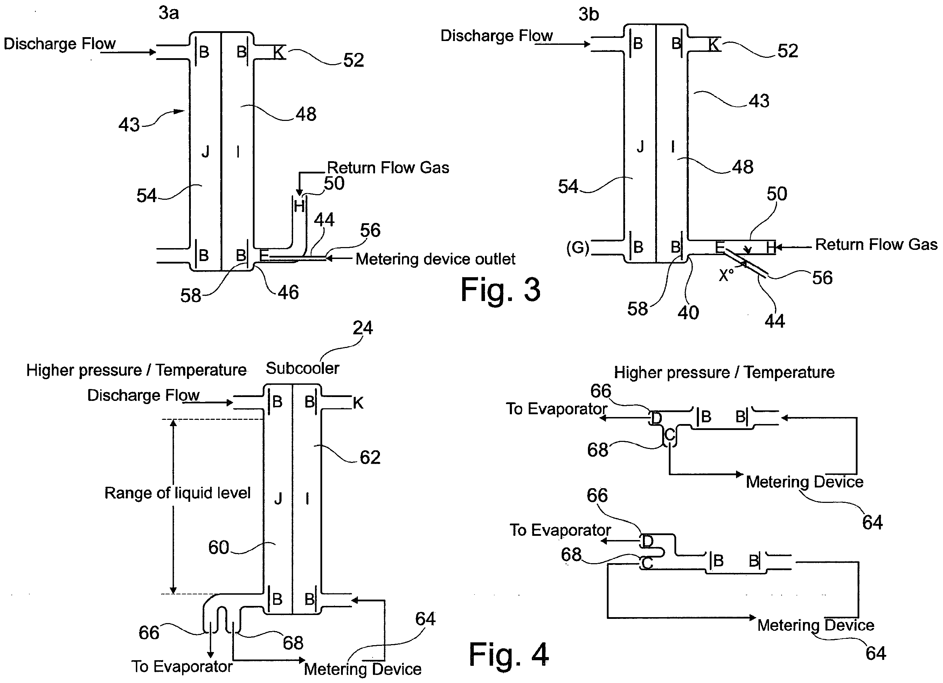

Figure 3 illustrates the manner in which a flow metering device outlet 44 is provided into the suction side inlet 46 to form an ejector (in order to improve gas velocity). This reduces pressure drop on the suction side, thereby increasing efficiency of heat transfer and, in turn, this increases incident velocities at the inlet baffle of the plate heat exchanger 43, to maximise turbulent flow. Two arrangements are shown for introducing the outlet 44 into the return inlet 46. However, the essential operation of both embodiments is the same, with the flow of gas returning from higher in the system to the compressor 4 and passing through a heat exchanger 8,10. In each case the gas is introduced into the volume 48 via inlet 50 connected to the inlet 46 and leaves via outlet 52. The pressure and temperature in region 48 is lower than in volume 54. Metering devices 16,18,20 feed high pressure liquefied refrigerant through a port which is of smaller diameter than inlet 50, via outlet 44. The invention exploits the Venturi effect, by placing the outlet 44 from the metering device at an angle <42 ° to the principle gas flow through inlet 50.

The arrangement in Figure 3a is most favourable from a kinematic point of view, as the high velocity outlet 56 from the metering device is parallel to the flow from inlet 50 to outlet 52. Further enhancement maybe achieved by bringing the outlet 44 closer to the heat exchanger inlet 46 and its baffle plate 58. By inclining the angle (X) which the inlet subtends to the direction of flow 50 at <42° the kinetic energy liquid stream leaving the flow metering device outlet 56 is imparted to the main flow, increasing its velocity and turbulence. This improves heat transfer within the heat exchangers. A further benefit of this feature is to reduce the pressure drop between the evaporator 24 of the system and the inlet of the compressor 4 which results in a lower temperature within the evaporator, increasing the system's usable heat transfer capability. The more acute the angle subtended by the outlet 56 from a metering device to the returning gas stream, the greater the effect. This feature is applicable to any form of metering device, and may be used in either a simplified form or in a more complex form as used by steam ejectors.

In Figure 4, when the heat exchanger is the sub-cooler 14, the flow of condensed liquid refrigerant passes from the high pressure side 60 of the heat exchanger 14 to the low pressure side 62 via a metering device 20 and is injected into the low pressure side 62 to effect cooling. The outlet from the sub-cooler is via outlets 66 and 68. The arrangement of the outlet 68 to flow metering device 20, which acts upon the sub-cooler, is placed such that the liquid fed to side 62 is maintained at all times in preference to outlet 66, which is the feed to the external evaporator. Therefore when under high heat load, (where there is little condensed liquid available) the cascade is always maintained at the expense of flow to the evaporator. In practice this ensures optimal efficiency is achieved even under high load conditions.

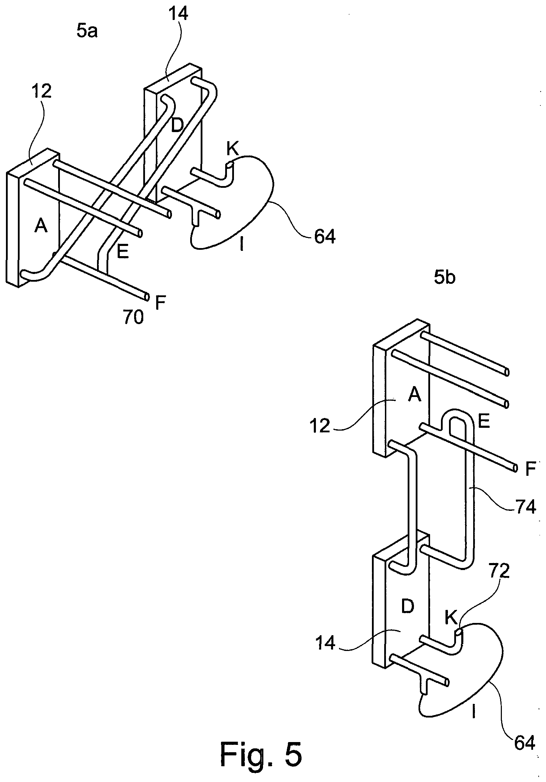

The sub cooler 14 in the auto-cascade process has a combined function in the invention, so that it acts both as a heat exchanger and liquid reservoir for cryogenically cooled refrigerant, as also shown in Figure 5 below. In the prior art, the volume of the sub-cooler on the high pressure side is negligible, and therefore has no practical liquid storage potential. However, in the current invention, the heat exchanger 14 is sized with respect, not to its heat transfer capability, but against the volume of condensed refrigerant (typically the lowest boiling point components constitute some 30% of the total systems charge by weight). The available volume in the high pressure side of the sub cooler should be designed to exceed 10% of the total volume of all the low boiling point component gases in their condensed state. When an excess of sub-cooled liquefied refrigerant is held within the preferential feed 68 to cool the sub-cooler, the system has a considerable degree of buffering against thermal over-load. The availability of sub-cooled liquid at the coldest point of the system is critical in maintaining stability of the auto-cascade, and re-establishing an effective auto-cascade at the end of a defrost phase, or following over-loading.

Figure 5a shows a conventional system in which the sub-cooler (14) is placed adjacent to the final heat exchanger in the cascade. In the event of excess sub-cooled liquid build up, then this tends to fill the heat exchanger 12 and causes a reduction in surface area and thereby limits the further production of sub-cooled liquid. In the arrangement in accordance with the invention as shown in Figure 5b, the sub-cooler 14 is located directly below the heat exchanger 12. In this way, any condensate formed in the final refrigeration process in 12 passes by gravity directly to the sub-cooler 14. If an excess of sub-cooled liquid builds up in it simply fills the sub-cooler 14 without consequence to the operation of the apparatus and so the invention ensures all gasses condensed in heat exchanger 12 pass through the sub-cooler metering device 64.

A further problem which is solved by this arrangement is the possibility of contamination, which problem is most prevalent when auto-cascade systems are installed onto older plant in which oil is usually present within the pre-existing evaporator. This is because auto-cascade systems are unable to eliminate oil from the compressor passing to the evaporator, which in many plants is also located at the lowest point of the system. The Figure 5a shows the prior art arrangement of the final stage refrigeration process 12 and the associated sub cooler 14. During the defrost phase, gas returning from the evaporator via line 70 carries the oil back to the heat exchanger 12, where it will freeze out as a waxy deposit. This makes its way to the outlet of capillary line 64 (which is typically at 173 °K or lower), where it solidifies and causes system failure. In accordance with the invention, Figure 5b shows an arrangement designed to prevent system failure through oil contamination. In this case, the invention orientates the flow from capillary line 72 downwards and takes the return from the suction side of the sub-cooler 14 through a swan neck arrangement 74. This ensures that although the oil will wax out at the low temperatures, it is carried as a fine mist of particles to warmer regions, where it has less potential for blocking the metering devices. In Figure 5b, outflow from the capillary lines 72 points in a downward direction. This ensures that even under heavy contamination the systems function correctly.

In prior art the solution is to overcome the problem of residual oil return by reducing the diameter of line 22, and thereby the flow of hot gas which passes directly from the compressor 4 to the evaporator 24. The invention allows the hot gas line 22 from the compressor to be larger, thereby increasing the flow and decreasing the time to achieve defrosting of the evaporator 24. Typically the invention reduces the defrost time by 50%. The disruptive effect caused by defrosting is therefore reduced, enhancing the ability of the system to recover and achieve a full ready state.

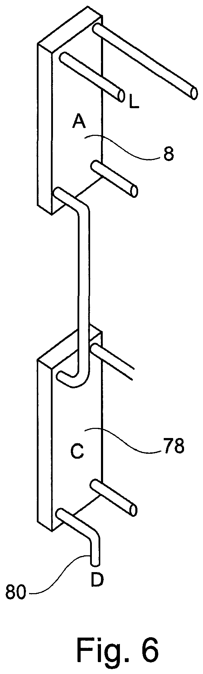

In Figure 6, the primary condenser 8 condenses the highest boiling point materials from the mixture, and may be air or water-cooled. The intention of the above arrangement is to ensure that though the velocity of the gas passing into 8 through the inlet to the heat exchanger 76 and out of the auxiliary condenser 78 through line 80 is reduced by approximately 30%, all of the condensate passes from 8 to 78 and onto the phase separation device (not shown) to the metering device 16 of Figure 1. This increases system robustness and increases the efficiency of the primary condenser 8, which does not become partially filled with condensate (as is common in prior art).

The present invention therefore provides a system and apparatus in which fast cool down to a ready state can be achieved i.e. one where the bulk of the refrigerant charge is condensed and both suction and discharge pressures have achieved a stable state. The optimal recovery of condensate with reduced carry-over from warm to colder system regimes can be achieved. The apparatus also achieves increased energy conversion during active cooling and has the ability to start to recover in less than 1 minute following a defrost period. The apparatus can be operated between cool and defrost conditions without a standby period and operate with a high speed defrost cycle with reduced risk of oil contamination from contaminated Meissner coils. At the same time the cascade operation at higher evaporation temperatures and greater loads can be achieved with improved recovery from an over-load condition. The apparatus is also capable of operating a cleaning protocol by passing gas simultaneously through cool and defrost lines to the evaporator.

The apparatus has the ability to effect stable temperature control across a wide temperature range solely through the use of hot gas injection and the orientation of lines into and out of HX4 and the sub-cooler ensures that the system is largely self cleaning and the orientation of the exhaust of the capillary feed to the sub-cooler aids self cleaning. The efficiency of the system is enhanced by reducing the pressure drop down the return side of the system by exploiting the Venturi effect of having the metering device exhausting at an angle of incidence of <42°C to the returning gas stream and preferential feeding by the use of gravity or a weir system at the outlet from the sub-cooler improves efficiency, stability and recovery of auto-cascade processes. The function of the sub-cooler and liquid receiver are combined in the final auto-cascade system to improve system efficiency and there is a reduced impact of oil entrainment during the defrosting of a contaminated evaporator.

In a further aspect of the invention the fluids which are used are high boiling point fluoro-carbon (derivative alkane, alkene and ketone) compounds, and or hydrocarbons with critical temperatures typically higher than 100oC -typical desired compressor discharge temperature. Therefore when within the refrigeration cycle they do not fully change state as would be the case in conventional systems. By virtue of being incorporated into systems where they have a much higher boiling point than the principle design the refrigerant forms mixtures which may be described a zeotropic in nature.

The materials in accordance with this invention have not previously been considered suitable for refrigeration applications since they never fully leave the liquid state raising fears of liquid returning directly to the compressor and fears that this may cause mechanical damage through liquid incompressibility. Experimentation with the proposed materials, when used in conjunction with appropriate system designs as described herein have been shown to be highly effective in containing the discharge pressures and temperature of compressors within an acceptable limit. For example, Tetrafluoromethane and tri-fluoromethane have been successfully used in a single component system despite critical pressures of 37.4 and 48.6 bar which are far in excess of the 22 bar considered as the normal maximum in conventional, cascade and auto-cascade refrigeration systems. Careful control of system design and refrigerant component proportions has been shown to be critical such that the important criteria is that the critical temperature of the add compound is above the condensation temperature for the primary refrigerant medium.

By reducing the temperature and pressure of the discharge from a compressor so the lubrication is improved and mechanical parts of the refrigeration system are subjected to less stress and therefore maybe expected to have a longer life time. Ideal thermal suppressant materials have the following properties a high boiling point, a low freezing point, good solvation for refrigerants in their gaseous phase, zero ozone depletion potential, low global warming potential, high vapour pressures, are chemically inert, non flammable and have good miscibility with compressor oil.

The materials proposed all meet the above criteria and have been shown in test situations with the appropriate conditions to be effective in both cascade and auto-cascade refrigeration systems. However, in the case of the fluorocarbon materials they have proved to have poor miscibility with compressor oil which limits their use to new systems specified with the correct lubricant (Polyolester).

In accordance with the invention when the materials are added to cascade refrigeration systems containing low boiling point refrigerants such as Trifluoro-methane or Tetrafluoromethane there is simultaneously a reduction in pressure and discharge temperature coupled with an increase in heat transfer at the condenser.

The mechanism by which suppression of discharge pressures and temperatures is achieved is as a result of the fact that the low boiling point component's solubility in its gas phase into the high boiling point material is a direct function of pressure. At the higher pressure found at discharge (200 psi or greater) components form a zeotropic mixture where the physical properties of the mixture are very strongly influenced by the pressure of the system. Cooling of the liquid / gas / vapour mixture at the condenser results in a liquid stream, free from vapour phase of the low boiling point component. Condensed material however is thought not to be fully miscible. This is in contrast with commercial refrigerant blends where the aim is to achieve a mixture with properties as close as possible to a single component (a zeotropic) system.

Once the mixture passes through a metering device in the system the reduction in pressure causes the balance within the zeotropic mixture to shift strongly in favour of a two component system. The Low boiling point material therefore boils off at a temperature close to that expected for the pure material. The higher boiling point component at this point must have a sufficiently low freezing point and viscosity at low temperatures to be effectively carried out of the evaporator to be returned to the compressor.

Most commercially available compressors types are sensitive to liquid returning through the suction port therefore the proportion of the high liquid component must be matched to the systems characteristics including; refrigerant type, compressor mechanism type, evaporating and condensing conditions. In experimentation ratios, between 5 and 40% were found to be effective and higher concentrations of the high boiling point component was found to cause damage to compressors and also problems in adjusting the flow rates through the metering devices. Hydrocarbons with similar thermo-physical properties were also investigated. Whilst flammable, they did perform exceptionally well in terms of suppression of the discharge temperature on percentage basis, they also have the advantage of complete miscibility with all commonly used compressor lubricants and therefore help with good oil management. In accordance with the invention the hydrocarbon materials would be used with concentrations lower than their explosive limit of 5%.

To effectively suppress the higher discharge temperatures encountered within a mixed gas (auto cascade) or multi-compression (cascade) refrigeration system the refrigerants may or may not form miscible mixtures by virtue of chemical or thermo-physical properties. The compounds proposed have zero ozone depletion and relatively small global warming impacts. In accordance with one embodiment of the invention compounds comprise one material from group A in the tables below in concentrations between 3 - 45% w:w in conjunction with at least one material from each of groups B, C and D within an auto-cascade refrigeration systems.

In another embodiment partially or fully fluorinated ketone's with carbon chains greater than 4 atoms, for example, nonafluoro-4-(trifluoromethyl)-3-pentanone ,may also be substituted for group A and B compounds when they become commercially available.

The hydrocarbons Hexane, Butane, and Pentane are proposed to improve efficiency and oil compatibility when used in combination with the fluoro - compounds.

The use of the compounds as herein described allows lowered compressor discharge temperatures, increased heat rejection from the system condenser, improved refrigeration capacity, the extension of the lowest achievable temperature. It also permits the use of refrigerants which would normally be outside of the compressor's range or have critical temperatures lower than -20 oC and enables the use of standard mechanical refrigeration components without modification. A lowered compression ratio can be achieved when hydrocarbons are incorporated at concentrations less than 4% and in which case the resultant blend is non-flammable. The system is universally compatible with all refrigeration oils including alkyl-benzene, Polyolester and mineral (synthetic and natural) with hydrocarbon incorporation and there is zero ozone depletion.

The invention also allows improved heat transfer through greater cycle efficiency and recovery of oil within oil separation devices.

**Table 1**

| Refrigerants Group Classification. | |
|---|---|
| Group | ASHRE Number |
| A | R-600a |
| A | R-600 |
| A | R-601a |
| A | R-601 |
| A | R-1234ez |
| A | R-30 |
| A | R-365mfc |
| A | R-245fa |
| A | R-43-10mee |
| A | R-227ea |
| A | R-236fa |
| A | R-C318 |
| A | R-3-1-10 |
| A | nonafluoro-4-(trifluoromethyl)-3-pentanone |
| B | R-717 |
| B | R-1270 |
| B | R-290 |
| B | R-1234yf |
| B | R-152a |
| B | R-32 |
| B | R-134a |
| B | R-407E |
| B | R-407D |
| B | R-407C |
| B | R-410A |
| B | R-407A |
| B | R-413A |
| B | R-410B |
| B | R-417A |
| B | R-407B |
| B | R-125 |
| B | R-404A |
| B | R-507A |
| B | R-143a |
| B | R-218 |
| B | R-218 |
| B | R-E170 |
| C | R-1150 |
| C | R-170 |
| C | R-1132a |
| C | R-1141 |
| C | R-116 |
| C | R-23 |
| C | R-508B |
| C | R-508A |
| C | R-744 |
| D | R740 |
| D | R50 |

**Table 2**

| | | | | | | | |
|---|---|---|---|---|---|---|---|
| **Blend composition for -120°C auto-cascade showing prior art and blends optimised for low global warming.** | | | | | | | |

| **Prior Art October** 1999 | **Formula** | **GWP** | | % **AGE ww** | | **Eq GWP** | **GWP Bench Mark** |
|---|---|---|---|---|---|---|---|
| R-245fa | (C3H3F5) | 3600 | | 29% | | 950 | |
| HFC-125 | (C2HF5) | 3400 | | 20% | | 680 | |
| HFC-23 | (CHF3) | 11700 | | 22% | | 2574 | |
| HFC 14 | (CF4) | 7,390 | | 25% | | 1829.025 | |
| Argon | Ar | 0 | | 4% | | 0 | |
| | | | | 100% | | 1206.605 | -1.53% |
| | | | | | | | |

| **Prior Art Jan 2000** | **Formula** | **GWP** | | | | **Eq GWP** | |
|---|---|---|---|---|---|---|---|
| HFC-236fa | (C3H2F6) | 3600 | | 29% | | 1044 | |
| HFC-125 | (C2HF5) | 3400 | | 20% | | 680 | |
| HFC-23 | (CHF3) | 11700 | | 22% | | 2574 | |
| HFC 14 | (CF4) | 7,390 | | 25% | | 1829.025 | |
| Argon | Ar | 0 | | 4% | | 0 | |
| | | | | 100% | | 1225.405 | 0% |
| | | | | | | | |

| **Prior Art 2005** | **Formula** | **GWP** | | | | **Eq GWP** | |
|---|---|---|---|---|---|---|---|
| HFC -365mfc | C₃HF₇ | 890 | | 25% | | 222.5 | |
| HCF-227efa | C₃HF₇ | 2900 | | 3% | | 87 | |
| R-290 | C₃H₈ | 3 | | 5% | | 0.15 | |
| HFC-125 | (C2HF5) | 3400 | | 16% | | 544 | |
| HFC-23 | (CHF3) | 11700 | | 22% | | 2574 | |
| HFC 14 | (CF4) | 7,390 | | 25% | | 1847.5 | |
| Argon | Ar | 0 | | 4% | | 0 | |
| | | | | 100% | | 753.5929 | -38.50% |
| | | | | | | | |

| **Low GWP Blend A** | **Formula** | **GWP** | **Lower % AGE ww** | **% AGE ww** | **Upper % AGE ww** | **Eq GWP** | |
|---|---|---|---|---|---|---|---|
| HFC -365mfc | C₄H₅F₅ | 890 | 15.00% | 25% | 40% | 222.5 | |
| HCF-227efa | C₃HF₇ | 2900 | 3.00% | 3% | 18% | 87 | |
| HFC-32 | (CHF3) | 650 | 2.00% | 20% | 35% | 130 | |
| HFC-23 | (CHF3) | 11700 | 8.00% | 18% | 33% | 2106 | |
| Ethane | (C2H6) | 0 | -5.00% | 5% | 20% | 0 | |
| HFC 14 | (CF4) | 7,390 | 15.00% | 25% | 40% | 1847.5 | |
| Argon | Ar | 0 | 1.00% | 4% | 19% | 0 | |
| | | | | 100% | | 627.5714 | -48.79% |
| | | | | | | | |

| **Low GWP Blend B** | **Formula** | **GWP** | **% AGE ww** | **% AGE ww** | **Upper % AGE ww** | **Eq GWP** | |
|---|---|---|---|---|---|---|---|
| HFC -365mfc | C₃HF₇ | 890 | 15.00% | 25% | 40% | 222.5 | |
| R-1234ez | C₃H₂F₄ | 6 | 3.00% | 3% | 18% | 0.18 | |
| R-1234yf | C₃H₂F₄ | 4 | 2.00% | 5% | 20% | 0.2 | |
| HFC-32 | (CHF3) | 650 | 5.00% | 15% | 30% | 97.5 | |
| Ethane | (C2H6) | 0 | 10.00% | 20% | 35% | 0 | |
| HFC 14 | (CF4) | 7,390 | 15.00% | 25% | 40% | 1847.5 | |
| Argon | Ar | 0 | 1.00% | 4% | 19% | 0 | |
| | | | | 97% | | 309.6971 | -74.73% |

## Claims

1. An auto-cascade refrigeration system (2) including a compressor (4) to compress cooling fluid, a heat exchanger (6) to condense at least some of the fluid and further heat exchangers (8,10,12) in combination with phase separator and metering devices (16,18,20) and an evaporator (24) to evaporate the fluid into a return or suction stream and which re-enters the heat exchangers (8,10,12) and wherein at least one flow metering device (20) is provided with an outlet (44) which leads into the suction side inlet (46) of at least one of the heat exchangers to form an ejector, a sub-cooler (14) is provided and a flow of condensed liquid refrigerant passes from a high pressure side (60) of the sub cooler (14) to a low pressure side (62) of the sub-cooler (14), the passage of fluid from the high pressure side of the sub-cooler (14) is via two outlets (66,68) with a first outlet (66) passing to the flow metering device (20) and provided such that the liquid fed to the low pressure side (62) is preferentially supplied to the first outlet (66) rather than to the second outlet (68) which is a feed to the evaporator, the sub-cooler (14) acts as both a heat exchanger and a liquid reservoir for cryogenically cooled refrigerant **characterised in that** the sub-cooler (14) is located below the heat exchanger (12) to which the same is connected such that the sub-cooler (14) collects any condensate formed in the refrigeration process.

2. A system according to claim 1 wherein the flow of fluid returning to the compressor (4) passes through the said further heat exchangers (8,10) and is introduced into a volume in the heat exchanger via an inlet (50) and leaves via an outlet (52) and the outlet (44) from the said flow metering device (20) is of a smaller diameter than the said inlet (50) into the heat exchanger.

3. A system according to any of the preceding claims wherein the outlet (44) from the flow metering device (20) is placed at an angle <42 ° to the principle gas flow through the heat exchanger inlet (50) to create a Venturi effect.

4. A system according to claim 3 wherein the outlet (44) from the flow metering device (20) is parallel to the flow from the heat exchanger inlet (50) to the heat exchanger outlet (52).

5. A system according to claim 1 wherein the flow metering device outlet (44) is inclined by an angle <42° so that the kinetic energy of the fluid stream leaving the flow metering device outlet (44) is imparted to the main flow.

6. A system according to claim 1 wherein all gasses condensed by the said heat exchanger pass through a metering device (64) connected to the sub cooler (14).

7. A system according to claim 1 wherein a capillary line (72) is provided to carry the return from the suction side of the sub-cooler (14) through a swan neck configuration (74).

8. A system according to any of the preceding claims wherein the system includes a phase change separator (28) which includes an inlet to receive a mixed flow of liquid and gas, a separation element (34), to allow separated out gas/vapour to exit through an outlet and the liquid to exit through an outlet and wherein the separator (28) has a void space (40) in which the received mixed flow of fluid is held and the diameter of the void (40) is greater than 4 times the diameter of the inlet and the volume of the void (40) is greater than 2% of the swept volume of the compressor (4).

9. A system according to claim 8 wherein the outlet is located in the base of the separator (28) and the walls adjacent the outlet are convex in shape.

10. A system according to any of the preceding claims wherein the system uses a refrigerant comprising a material selected from the Group of materials with the ASHRE numbers R-600a, R-600, R-601a, R-601, R-1234ez, R-30, R-365mfc, R-245fa, R-43-10mee, R-227ea, R-236fa, R-C318 R-3-1-10 or nonafluoro-4-(trifluoromethyl)-3-pentanone, a material selected from the Group of materials with the ASHRE numbers, R-717, R-1270, R-290, R-1234yf, R-152a, R-32, R-134a, R-407E, R-407D, R-407C, R-410A, R-407A, R-413A, R-410B, R-417A, R-407B, R-125, R-404A, R-507A, R-143a, R-218, R-E170, a material selected from the Group of materials with the ASHRE numbers R-1150, R-170, R-1132a, R-1141, R-116, R-23, R-508B, R-508A, R-744 and a material selected from the Group of materials with eth ASHRE numbers R740, R50.

11. A system according to any of the preceding claims wherein the refrigerant used includes HFC32 and/or ethane.

12. A system according to any of the preceding claims wherein the refrigerant used includes HFC -365mfc, HCF-227efa, HFC-32, HFC-23, Ethane, HFC 14 and Argon.

13. A system according to any of the claims 1-11 wherein the refrigerant used includes HFC -365mfc, R-1234ez, R-1234yf, HFC-32, Ethane, HFC 14, Argon.

## Patentansprüche

1. Automatische-Kaskade-Kühlsystem (2) mit einem Kompressor (4) zum Komprimieren von Kühlfluid, einem Wärmetauscher (6) zum Kondensieren wenigstens eines Teils des Fluids und weiteren Wärmetauschern (8, 10, 12) in Kombination mit Phasenseparator und Messgeräten (16, 18, 20) und einem Verdampfer (24) zum Verdampfen des Fluids in einen Rücklauf- oder Saugstrom, der erneut in die Wärmetauscher (8, 10, 12) eintritt, wobei wenigstens ein Durchflussmessgerät (20) mit einem Auslass (44) versehen ist, der in den saugseitigen Einlass (46) von wenigstens einem der Wärmetauscher führt, um einen Ejektor zu bilden, ein Subkühler (14) vorgesehen ist und ein Strom von kondensiertem flüssigem Kühlmittel von einer Hochdruckseite (60) des Subkühlers (14) zu einer Niederdruckseite (62) des Subkühlers (14) passiert, wobei die Passage von Fluid von der Hochdruckseite des Subkühlers (14) über zwei Auslässe (66, 68) erfolgt, wobei ein erster Auslass (66) zum Durchflussmessgerät (20) passiert und so vorgesehen ist, dass die zur Niederdruckseite (62) gespeiste Flüssigkeit vorzugsweise dem ersten Auslass (66) anstatt dem zum Verdampfer gespeisten zweiten Auslass (68) zugeführt wird, der Subkühler (14) sowohl als Wärmetauscher als auch als Flüssigkeitsreservoir für kryogen gekühltes Kühlmittel dient, **dadurch gekennzeichnet, dass** sich der Subkühler (14) unterhalb des Wärmetauschers (12) befindet, mit dem er verbunden ist, so dass der Subkühler (14) im Kühlprozess gebildetes Kondensat auffängt.

2. System nach Anspruch 1, wobei der Fluss von zum Kompressor (4) zurücklaufendem Fluid durch die genannten weiteren Wärmetauscher (8, 10) passiert und in ein Volumen im Wärmetauscher über einen Einlass (50) eingeleitet wird und über einen Auslass (52) austritt, und der Auslass (44) von dem genannten Durchflussmessgerät (20) einen kleineren Durchmesser hat als der genannte Einlass (50) in den Wärmetauscher.

3. System nach einem der vorherigen Ansprüche, wobei der Auslass (44) vom Durchflussmessgerät (20) in einem Winkel von <42° zum Hauptgasfluss durch den Wärmetauschereinlass (50) platziert ist, um einen Venturi-Effekt zu erzeugen.

4. System nach Anspruch 3, wobei der Auslass (44) vom Durchflussmessgerät (20) parallel zum Fluss vom Wärmetauschereinlass (50) zum Wärmetauscherauslass (52) ist.

5. System nach Anspruch 1, wobei der Auslass (44) des Durchflussmessgeräts in einem Winkel von <42° geneigt ist, so dass die kinetische Energie des den Auslass (44) des Durchflussmessgeräts verlassenden Fluidstroms dem Hauptfluss vermittelt wird.

6. System nach Anspruch 1, wobei alle von dem genannten Wärmetauscher kondensierten Gase durch ein mit dem Subkühler (14) verbundenes Messgerät (64) passieren.

7. System nach Anspruch 1, wobei eine Kapillarleitung (72) vorgesehen ist, um den Rücklauf von der Saugseite des Subkühlers (14) durch eine Schwanenhalskonfiguration (74) zu führen.

8. System nach einem der vorherigen Ansprüche, wobei das System einen Phasenwechselseparator (28), der einen Einlass zum Aufnehmen eines Mischflusses von Flüssigkeit und Gas aufweist, ein Trennelement (34) aufweist, so dass getrenntes/r Gas/Dampf durch einen Auslass und die Flüssigkeit durch einen Auslass austreten kann, und wobei der Separator (28) einen Hohlraum (40) aufweist, in dem der aufgenommene Mischfluss von Fluid gehalten wird, und der Durchmesser des Hohlraums (40) mehr als das Vierfache des Durchmessers des Einlasses beträgt und das Volumen des Hohlraums (40) mehr als 2 % des Hubraums des Kompressors (4) beträgt.

9. System nach Anspruch 8, wobei sich der Auslass in der Basis des Separators (28) befindet und die Wände neben dem Auslass konvex geformt sind.

10. System nach einem der vorherigen Ansprüche, wobei das System ein Kühlmittel benutzt, das ein Material ausgewählt aus der Gruppe von Materialien mit den ASHRE-Nummern R-600a, R-600, R-601a, R-601, R-1234ez, R-30, R-365mfc, R-245fa, R-43-10mee, R-227ea, R-236fa, R-C318 R-3-1-10 oder Nonafluor-4-(trifluormethyl)-3-pentanon, ein Material ausgewählt aus der Gruppe von Materialien mit den ASHRE-Nummern R-717, R-1270, R-290, R-1234yf, R-152a, R-32, R-134a, R-407E, R407D, R-407C, R-410A, R-407A, R-413A, R-410B, R-417A, R-407B, R-125, R-404A, R-507A, R-143a, R-218, R-E170, ein Material ausgewählt aus der Gruppe von Materialien mit den ASHRE-Nummem R-1150, R-170, R-1132a, R-1141, R-116, R-23, R-508B, R-508A, R-744, und ein Material ausgewählt aus der Gruppe von Materialen mit den ASHRE-Nummern R740, R50 umfasst.

11. System nach einem der vorherigen Ansprüche, wobei das benutzte Kühlmittel HFC32 und/oder Ethan beinhaltet.

12. System nach einem der vorherigen Ansprüche, wobei das benutzte Kühlmittel HFC-365mfc, HFC-227efa, HFC-32, HFC-23, Ethan, HFC 14 und Argon beinhaltet.

13. System nach einem der Ansprüche 1-11, wobei das benutzte Kühlmittel HFC-365mfc, R-1234ez, R-1234yf, HFC-32, Ethan, HFC 14 und Argon beinhaltet.

## Revendications

1. Système de réfrigération en auto-cascade (2) comprenant un compresseur (4) pour comprimer le fluide de refroidissement, un échangeur thermique (6) pour condenser au moins une partie du fluide et d'autres échangeurs thermiques (8, 10, 12) combinés à un séparateur de phase et des dispositifs de mesure (16, 18, 20) et un évaporateur (24) pour faire évaporer le fluide en un flux de retour ou un flux d'aspiration et qui est réinjecté dans les échangeurs thermiques (8, 10, 12) et dans lequel au moins un dispositif de mesure de débit (20) est doté d'une sortie (44) qui mène dans l'entrée côté aspiration (46) d'au moins l'un des échangeurs thermiques de manière à former un éjecteur, un refroidisseur secondaire (14) est pourvu et un flux de réfrigérant liquide condensé passe d'un côté haute pression (60) du refroidisseur secondaire (14) à un côté basse pression (62) du refroidisseur secondaire (14), le passage du liquide depuis le côté haute pression du refroidisseur secondaire (14) s'effectuant par l'intermédiaire de deux sorties (66, 68) avec une première sortie (66) passant au dispositif de mesure de débit (20) et pourvue de telle sorte que le liquide alimenté au côté basse pression (62) soit préférablement fourni à la première sortie (66) plutôt qu'à la deuxième sortie (68) qui est alimentée à l'évaporateur, le refroidisseur secondaire (14) assumant la fonction à la fois d'échangeur thermique et de réservoir de liquide pour le réfrigérant refroidi cryogéniquement, **caractérisé en ce que** le refroidisseur secondaire (14) se trouve en dessous de l'échangeur thermique (12) auquel il est relié si bien que le refroidisseur secondaire (14) recueille tout condensat formé au cours du processus de réfrigération.

2. Système selon la revendication 1 dans lequel le flux de fluide revenant au compresseur (4) passe par lesdits autres échangeurs thermiques (8, 10) et est introduit dans un volume dans l'échangeur thermique par l'intermédiaire d'une entrée (50) et sort par l'intermédiaire d'une sortie (52) et la sortie (44) ménagée dans ledit dispositif de mesure de débit (20) est d'un diamètre plus réduit que ladite entrée (50) ménagée dans l'échangeur thermique.

3. Système selon l'une quelconque des revendications précédentes dans lequel la sortie (44) du dispositif de mesure de débit (20) est placée à un angle < 42 ° par rapport au flux de gaz principal passant par l'entrée de l'échangeur thermique (50) de manière à créer un effet Venturi.

4. Système selon la revendication 3 dans lequel la sortie (44) ménagée dans le dispositif de mesure du débit (20) est parallèle au flux s'écoulant de l'entrée de l'échangeur thermique (50) à la sortie de l'échangeur thermique (52).

5. Système selon la revendication 1 dans lequel la sortie du dispositif de mesure de débit (44) est inclinée à un angle < 42 ° de sorte à ce que l'énergie cinétique du flux de liquide s'écoulant de la sortie du dispositif de mesure de débit (44) soit impartie au flux principal.

6. Système selon la revendication 1 dans lequel tous les gaz condensés par ledit échangeur thermique passent par un dispositif de mesure (64) relié au refroidisseur secondaire (14).

7. Système selon la revendication 1 dans lequel une conduite capillaire (72) est pourvue pour transporter le retour côté aspiration du refroidisseur secondaire (14) à travers une configuration en col de cygne (74).

8. Système selon une quelconque des revendications précédentes dans lequel le système est doté d'un séparateur de changement de phase (28) qui comporte une entrée pour recevoir un flux mélangé de liquide et de gaz, un élément de séparation (34), pour permettre au gaz/vapeur séparés de sortir par une sortie et au liquide de sortir par une sortie et dans lequel le séparateur (28) a un espace vide (40) dans lequel le flux de fluide mélangé reçu est maintenu et le diamètre du vide (40) est 4 fois supérieur au diamètre de l'entrée et le volume du vide (40) est 2 % supérieur au débit volumique du compresseur (4).

9. Système selon la revendication 8 dans lequel la sortie se trouve dans la base du séparateur (28) et les parois adjacentes à la sortie sont de forme convexe.

10. Système selon l'une quelconque des revendications précédentes dans lequel le système utilise un réfrigérant comprenant un matériau sélectionné dans le groupe de matériaux portant les numéros ASHRE R-600a, R-600, R-601a, R-601, R-1234ez, R-30, R-365mfc, R-245fa, R-43-10mee, R-227ea, R-236fa, R-C318, R-3-1-10 ou nanofluoro-4-(trifluorométhyl)-3-pentanone, un matériau sélectionné dans le groupe de matériaux portant les numéros ASHRE R-717, R-1270, R-290, R-1234yf, R-152a, R-32, R-134a, R-407E, R-407D, R-407C, R-410A, R-407A, R-413A, R-410B, R-417A, R-407B, R-125, R-404A, R-507A, R-143a, R218, R-E170, un matériau sélectionné dans le groupe de matériaux portant les numéros ASHRE R-1150, R-170, R-1132a, R-1141, R-116, R-23, R-508B, R-508A, R-744 et un matériau sélectionné dans le groupe de matériaux portant les numéros ASHRE R740, R50.

11. Système selon l'une quelconque des revendications précédentes dans lequel le réfrigérant utilisé contient HFC32 et/ou éthane.

12. Système selon l'une quelconque des revendications précédentes dans lequel le réfrigérant utilisé contient HF-365mfc, HCF-227efa, HFC-32, HFC-23, éthane, HFC 14 et argon.

13. Système selon l'une quelconque des revendications précédentes dans lequel le réfrigérant utilisé contient HFC-365mfc, R-1234ez, R-1234yf, HFC-32, éthane, HFC 14, argon.
